(19) Europäisches Patentamt
European Patent Office
Office européen des brevets

(11) Veröffentlichungsnummer: **0 141 321**
**B1**

(12) # EUROPÄISCHE PATENTSCHRIFT

(45) Veröffentlichungstag der Patentschrift: **01.06.88**

(51) Int. Cl.[4]: **C 08 G 77/18**, C 08 G 77/46, D 06 M 15/643, D 01 F 1/02

(21) Anmeldenummer: **84112296.3**

(22) Anmeldetag: **12.10.84**

(54) **Siliciumorganische Verbindungen und diese enthaltende Textilfaserpräparationen.**

(30) Priorität: **25.10.83 DE 3338663**

(43) Veröffentlichungstag der Anmeldung: **15.05.85 Patentblatt 85/20**

(45) Bekanntmachung des Hinweises auf die Patenterteilung: **01.06.88 Patentblatt 88/22**

(84) Benannte Vertragsstaaten: **BE FR IT NL**

(56) Entgegenhaltungen:
**DE - C - 2 645 459**
**DE - C - 2 645 890**

(73) Patentinhaber: **Th. Goldschmidt AG, Goldschmidtstrasse 100 Postfach 101461, D-4300 Essen 1 (DE)**

(72) Erfinder: **Koerner, Götz, Dr., Kantorie 126, D-4300 Essen (DE)**
Erfinder: **Rott, Hans, Dr., Barkhovenallee 22, D-4300 Essen 16 (DE)**
Erfinder: **Schmidt, Günter, Dr., Ahornstrasse 47, D-4300 Essen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft neue siliciumorganische Verbindungen. Sie betrifft ferner Zubereitungen zur Behandlung von Fasern, welche diese neuen Verbindungen enthalten, wobei die Zubereitungen insbesondere für die Präparation von aus der Schmelze gewonnenen synthetischen Fasern, insbesondere Polyesterfasern, geeignet sind.

Polydimethylsiloxane werden in Spinnereien zur Präparation schmelzgesponnener Fasern eingesetzt. Dieser Einsatz wird dadurch möglich, dass Polydimethylsiloxane, meist einfach Siliconöle genannt, den damit behandelten Fasern einen niedrigen Reibungskoeffizienten, besonders bei hohen Garnabzugsgeschwindigkeiten, verleihen, wobei dieser Reibungskoeffizient eine geringe Temperaturabhängigkeit aufweist. Ausserdem sind Siliconöle aussergewöhnlich hitzestabil und weisen einen niedrigen Viskositätstemperaturkoeffizienten auf.

Die Präparation schmelzgesponnener Garne direkt nach ihrer Herstellung ermöglicht die anschliessenden Verstreckungs- und Texturierprozesse. Die Präparation muss dabei als Gleitmittel und antistatisch wirksam sein. Bei Thermofixierungsprozessen an dem Garn werden Präparationsbestandteile auf die Heizaggregate abgeschleudert und dort lange Zeit thermisch beansprucht. Deshalb muss die Präparation thermisch stabil sein. Die abgeschleuderte Präparation soll möglichst nicht vergelen, vergilben und verdampfen, wobei am wichtigsten ist, dass keine Vergelung stattfindet. Gleichzeitig sollen die Präparationsbestandteile untereinander gut verträglich sein. Das ist besonders dann problematisch, wenn es um die Verträglichkeit zwischen den vor allem für die antistatische Wirksamkeit verantwortlichen polaren, tensidischen Bestandteilen und den hauptsächlich für die Gleiteigenschaften verantwortlichen unpolaren Methylsiliconölen geht.

Die Verträglichkeit der Methylsiliconöle lässt sich verbessern, wenn man die Methylgruppen teilweise durch längerkettige Alkylgruppen ersetzt. Die resultierenden Öle sind dann aber nicht mehr ausreichend thermisch stabil. Der Viskositätstemperaturkoeffizient solcher modifizierter Methylsiliconöle steigt ausserdem stark an.

Auch der teilweise Ersatz von Methylgruppen durch Phenylgruppen führt zur Produkten mit höherem Viskositätstemperaturkoeffizienten, deren Gleiteigenschaften verschlechtert sind.

Aus der DE-B-26 45 459 sind Textilfaserpräparationen mit dem Kennzeichen bekannt, dass sie als wirksame Komponente aus 1 bis 99 Gew.-% Verbindungen der allgemeinen Formel

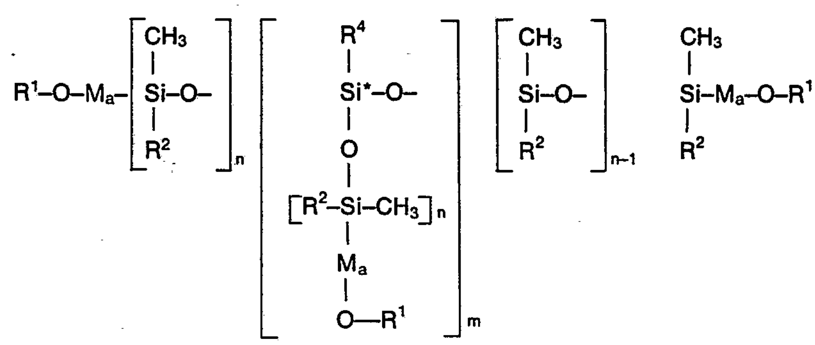

worin

$R^1$ ein Mono-, Di- oder Trialkylphenylrest ist, wobei die Summe der in Form der Alkylreste gebundenen Kohlenstoffatome pro Phenylrest mindestens 6 und höchstens 12 beträgt, und bzw. oder der Trimethylsilylrest ist,

$R^2$ ein Alkylrest mit 1 bis 16 Kohlenstoffatomen ist, wobei die Kohlenstoffkette von der Gruppierung

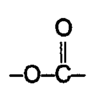 oder 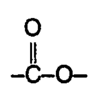

unterbrochen sein kann und/oder der Rest $M_a$–O–$R^3$ ist, wobei $R^3$ ein Mono-, Di- oder Trialkylphenylrest ist, wobei die Summe der in Form der Alkylreste gebundenen Kohlenstoffatome pro Phenylrest mindestens 6 und höchstens 12 beträgt, und bzw. oder der Rest

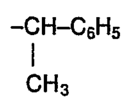

ist,

$R^4$ ein Alkylrest mit 1 bis 16 Kohlenstoffatomen und bzw. oder

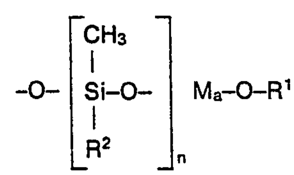

bedeutet,

M ein Alkylenrest mit 1 bis 3 Kohlenstoffatomen ist,

die Indices

n einen beliebigen Wert von 2,5 bis 15,

m einen Wert von 0 bis 5 und

a einen Wert von 0 oder 1 haben,

und das durchschnittliche Molekül 5 bis 30 Si-Atome, von denen höchstens 20 Mol-% Si*-Atome sind, und 0,5 bis 10 Mono-, Di- oder Trialkylphenylreste enthält.

neben 99 bis 1 Gew.-% an sich bekannten Präparationsbestandteilen, besteht.

Diese Verbindungen zeichnen sich durch hohe thermische Stabilität aus und verleihen den mit

solchen Präparationen behandelten Fasern ausgezeichnete Gleiteigenschaften.

Diesen Verbindungen verwandt sind die Verbindungen der DE-PS 26 45 890 mit der Formel

$$R^1\text{–O–}\left[\begin{array}{c} CH_3 \\ | \\ \text{Si–O–} \\ | \\ R^2 \end{array}\right]_{2n-1} \begin{array}{c} CH^3 \\ | \\ \text{Si–O–}R^1 \\ | \\ R^2 \end{array}$$

wobei

$R^1$ ein Mono-, Di- oder Trialkylphenylrest ist und die Summe der Alkylkohlenstoffatome je Phenylrest 6 bis 12 ist und/oder der Rest

$$-\left[\begin{array}{l} \text{CH–CH}_2\text{–O–} \\ | \\ CH_3 \end{array}\right]_b (CH_2CH_2O\text{–})_cR^3$$

wobei $R^3$ ein Alkylrest mit 1 bis 16 C-Atomen, ein Organoacylrest mit 1 bis 12 C-Atomen oder ein Arylrest ist, b einen Wert von 0 bis 2 und c einen Wert von 1 bis 30 hat,
und/oder ein Trimethylsilylrest ist,

$R^2$ ein Methylrest ist,

n einen Wert von 2,5 bis 12,5 hat

und das durchschnittliche Molekül 5 bis 25 Si-Atome und 0,4 bis 2,0 Mono-, Di- oder Trialkylphenylreste, die über O-Bindungen direkt an Si-Atome gebunden sind, und 0,4 bis 2,0 Polyetherblöcke enthält.

Schmelzspinnpräparationen, welche diese Verbindungen der DE-PS 26 45 890 enthalten, zeigen verbesserte Verträglichkeit der siliciumorganischen Verbindungen mit den Ölen und Tensiden, welche üblicherweise in Schmelzspinnpräparationen enthalten sind. Diese erhöhte Verträglichkeit ist auf den Gehalt an Oxyalkyleneinheiten in den siliciumorganischen Verbindungen zurückzuführen, welche allerdings die thermische Stabilität der Schmelzspinnpräparationen, verglichen mit denen der DE-B-26 45 459, verringern. Es ist deshalb je nach Anwendungszweck notwendig, eine optimale Balance in bezug auf den Gehalt an Alkyloxy- und Oxyalkyleneinheiten zu suchen. Die Verbindungen der DE-B-26 45 890 sind deshalb in den Fällen besonders vorteilhaft zu verwenden, wenn eine hohe Verträglichkeit mit anderen Zusatzstoffen der Schmelzspinnpräparation gefordert wird, die thermische Beanspruchung aber verhältnismässig gering ist.

Es hat sich im Verlauf der technischen Anwendung der Schmelzspinnpräparationen entsprechend der DE-B-26 45 459 und der DE-B-26 45 890 gezeigt, dass derartige Präparationen mitunter während der Anwendung, insbesondere bei längerem Verweilen in den für die Ausrüstung benutzten Behältern, Trübungen und gegebenenfalls Phasentrennungen zeigen können. Diese Eintrübungen sind insbesondere zu beobachten, wenn die Schmelzspinnpräparationen oxalkylierte Fettamine aufweisen. Diese oxalkylierten Fettamine werden aber Schmelzspinnpräparationen sehr häufig zugesetzt, um die Gleiteigenschaften der Fasern zu verbessern und deren statische Aufladung zu verringern.

Der vorliegenden Erfindung liegt die Aufgabe zugrunde, diesen Nachteil zu beseitigen und damit die Verträglichkeit der siliciumorganischen Verbindungen mit anderen üblichen Präparationsmitteln, insbesondere oxalkylierten Fettaminen, zu verbessern. Dabei soll die thermische Stabilität der Verbindungen gemäss der DE-B-26 45 459 und die der Verbindungen der DE-B-26 45 890 nicht verringert werden.

Überraschenderweise hat sich gezeigt, dass diese Forderungen von neuen siliciumorganischen Verbindungen erfüllt werden, welche der Formel entsprechen:

$$R^1\text{–}\left[\begin{array}{c} CH_3 \\ | \\ \text{Si–O–} \\ | \\ CH_3 \end{array}\right]_n \begin{array}{c} CH_3 \\ | \\ \text{Si–}R^1 \\ | \\ CH_3 \end{array} \qquad \text{I}$$

wobei

$R^1$ im durchschnittlichen Molekül verschiedene Bedeutungen haben kann, und zwar

20 bis 100% der Reste $R^1$ den Rest

$$R^2O\text{–}\left[\begin{array}{c} \text{CH}_2\text{–CHO–} \\ | \\ CH_3 \end{array}\right]_a \qquad \text{II}$$

bedeuten, wobei $R^2$ ein Mono-, Di- oder Trialkylphenylrest ist, und die Summe der Alkylkohlenstoffatome je Phenylrest 6 bis 12, und a = 1 oder 2 ist, und

0 bis 80% der Reste $R^1$ den Rest

$$\text{O–}\left[\begin{array}{l} \text{CH–CH}_2\text{O–} \\ | \\ CH_3 \end{array}\right]_b \left[\begin{array}{c} \text{CH}_2\text{CH}_2\text{O–} \\ \\ \end{array}\right]_c R^3 \qquad \text{III}$$

bedeuten, wobei $R^3$ ein Alkylrest mit 1 bis 16 Kohlenstoffatomen, ein Organoacylrest mit 1 bis 12 Kohlenstoffatomen oder ein Arylrest, b = 1 oder 2, und c = 1 bis 30 ist, und

n = 3 bis 30 ist.

Die vorgenannte Formel I ist die durchschnittliche Formel des molaren Moleküls. Der Rest $R^1$ kann somit unterschiedliche Bedeutung haben, er kann jedoch auch die gleiche Bedeutung aufweisen.

Für den Fall, dass der Rest $R^1$ in den neuen Verbindungen die gleiche Bedeutung hat, bedeutet er den Rest II. Der Rest $R^2$ ist ein Alkylphenylrest, wobei im Phenylrest 1, 2 oder 3 Alkylreste enthalten sein können, wobei die Summe der Alkylkohlenstoffatome im Phenylrest 6 bis 12 beträgt. Bevorzugte Alkylphenylreste sind der Nonylphenylrest und der Di-sek.-butylphenylrest.

Der Index a hat einen Wert von 1 bis 2.

Diese Verbindungen sind somit den Verbindungen der DE-B-26 45 459, insbesondere der dort in Spalte 6, Zeile 30, genannen Verbindung

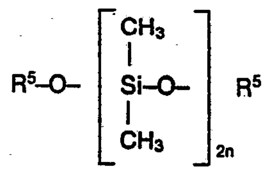

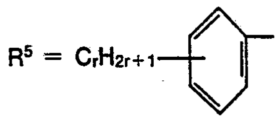

wobei der Substituent $C_rH_{2r+1}$– sich hauptsächlich in para-Stellung befindet,

r = 8 bis 12,

n = vorzugsweise 5 bis 10,

besonders verwandt. Sie weisen annähernd die gleiche thermische Stabilität auf, zeigen jedoch nicht in Verbindung mit anderen Präparationsmitteln die vorgenannten Eintrübungen oder Phasentrennungen.

Es können jedoch im durchschnittlichen Molekül der Formel I bis zu 80% der Reste $R^1$ die Bedeutung des Restes III haben. Dabei ist $R^3$ ein Alkylrest mit 1 bis 16 Kohlenstoffatomen, vorzugsweise ein Methyl- oder ein Butylrest, ein Organoacylrest mit 1 bis 12 Kohlenstoffatomen, vorzugsweise ein Acetylrest, oder ein Arylrest, vorzugsweise ein Nonylphenylrest.

Der Index b hat einen Wert von 1 bis 2, der Index c einen solchen von 1 bis 30.

Verbindungen, bei denen $R^1$ somit unterschiedliche Bedeutungen haben kann, sind den Verbindungen, welche in der DE-B-26 45 890 beschrieben sind, verwandt. Sie weisen deshalb deren thermische Stabilität auf, die gegenüber derjenigen der Verbindungen der DE-B-26 45 459 verringert ist, zeigen aber ebenfalls die verbesserte Verträglichkeit, welche nun auch gegenüber Verbindungen vom Typ der oxalkylierten Fettamine verbessert ist. Die neuen erfindungsgemässen Verbindungen, bei denen $R^1$ aus dem vorerwähnten Gemisch zweier verschiedener Reste besteht, zeigen ebenfalls in Schmelzspinnpräparationen keine Ausscheidungen oder Phasentrennungen.

Die durch die Formel des Patentanspruchs 1 in ihrer Struktur definierten Verbindungen haben somit die gemeinsame Eigenschaft der verbesserten Verträglichkeit mit anderen Bestandteilen von Schmelzspinnpräparationen, insbesondere in Mischung mit oxalkylierten Fettaminen, bei Erhalt der den einzelnen Verbindungen eigenen Temperaturbelastbarkeit.

Die Herstellung der erfindungsgemässen Verbindungen gelingt in der dem Fachmann bekannten Weise. Man kann die Verbindungen z. B. entsprechend der US-PS 3 115 512 durch Umsetzung von äquilibrierten Chlorsiloxanen oder Chlorsiloxanylsulfaten mit propoxylierten Alkylphenolen, gegebenenfalls im Gemisch mit Polyoxyalkylenmonoolen, herstellen. Ein weiterer bekannter Weg zur Herstellung der erfindungsgemässen Verbindungen beruht auf der Umsetzung der propoxylierten Phenole, gegebenenfalls im Gemisch mit den Polyethermonoolen mit äquilibrierten Wasserstoffsiloxanen in Gegenwart geeigneter Katalysatoren, wie z. B. Zinnoctoat, entsprechend der GB-PS 954 041.

Die Erfindung betrifft ferner Textilfaserpräparationen, insbesondere Schmelzspinnpräparationen, welche die erfindungsgemässen siliciumorganischen Verbindungen enthalten (im folgenden als Substanzen der Gruppe A bezeichnet).

Neben diesen erfindungsgemässen Verbindungen der Gruppe A enthalten sie gegebenenfalls als Mitglieder einer Gruppe B solche Substanzen, die unpolar sind und die Gleiteigenschaften auch bei sehr hohen Garnabzugsgeschwindigkeiten günstig beeinflussen. Zu dieser Gruppe gehören z. B. die sogenannten Esteröle, wie etwa Fettsäureester von Polyolen. Vertreter solcher Verbindungen sind Trimethylolpropantripelargonat oder Ester von Monoolen, wie Stearinsäurehexadecylester, Stearinsäurebutylester oder Oleyloleat. Als Esteröle kann man auch Dialkylphthalate bezeichnen, wobei solche Dialkylphthalate von Interesse sind, welche sich von verzweigten sekundären oder primären Alkoholen ableiten. Auch Esteröle, die sich von aliphatischen Dicarbonsäuren ableiten, sind verwendbar. Preislich günstigere unpolare Präparationsbestandteile sind Mineralöle bzw. flüssige oligomere Polyolefine. Solche Präparationsbestandteile sind aber den Esterölen hinsichtlich ihrer thermischen Stabilität unterlegen. Als im wesentlichen unpolare Bestandteile sind auch hydrophobe Polypropylenglykole zu bezeichnen, welche aber gegenüber den Esterölen ebenfalls bezüglich ihrer thermischen Belastbarkeit Nachteile aufweisen.

Die Viskositäten (bei 20 °C) der unpolaren bzw. schwachpolaren Öle dieser Gruppe B liegen in der Regel zwischen 5 und 100 cP, vorzugsweise 10 bis 60 cP. Schmelzspinnpräparationen enthalten häufig polare Anteile, die man je nach ihrer mehr oder weniger ausgeprägten Polarität in Verbindungen der Gruppe C und Gruppe D aufteilen kann.

Die mässig polaren, nichtionischen Komponenten der Gruppe C haben u.a. die Aufgabe, die antistatische Wirkung zu verbessern und gegebenenfalls die Verträglichkeit der unpolaren Anteile (Gruppe B) mit den stark polaren, ionischen Bestandteilen (Gruppe D) zu verbessern. Letztere Bestandteile sind besonders als Antistatika gebräuchlich. Typische Vertreter nichtionischer Präparationsbestandteile sind wasserlösliche oder wasserdispergierbare Ethylenoxid-Addukte an Fettsäuren, Fettalkohole, Fettamine oder Fettsäureamide, wobei die flüssigen niederviskosen Vertreter dieser Gruppe bevorzugt sind. Besonders geeignet ist $C_{12}H_{25}N(CH_2CH_2OH)_2$, wobei der $C_{12}H_{25}$-Rest eine Mischung aus $C_8H_{17}$-, $C_{10}H_{21}$-, $C_{12}H_{25}$-, $C_{14}H_{29}$-, $C_{16}H_{33}$-, $C_{18}H_{37}$-Resten darstellt. Dabei können die OH-Gruppen teilweise oder vollständig verestert oder verethert sein. Geeignet sind auch Ethylenoxid-Addukte, Ester von Fettsäuren, wie Glycerin- bzw. Sorbitester, z. B. Sorbitmonooleat oder Glycerintrioleat. Besonders thermostabile, nichtionische Präparationsbestandteile stellen Ethylenoxid-Addukte an Alkylphenole, wie z. B. Nonylphenol, dar. Auch andere Polyethylen-

glykolmonoarylether eignen sich als besonders thermostabile Präparationsbestandteile, wobei der Arylrest ein Phenylrest sein kann. In den mässig polaren, nichtionischen Komponenten der Gruppe C gehören letzten Endes auch die erfindungsgemässen Siliconpolyether, die hier als eine besondere Gruppe A herausgestellt sind, aufgrund ihrer besonderen thermischen Stabilität und Gleiteigenschaften.

Die stark polaren Präparationsanteile der Gruppe D, welche aus ionische Gruppen aufweisenden, meist flüssigen organischen Tensiden bestehen, können anionisch, amphoter oder kationisch sein. Diese Verbindungen haben vor allem als antistatisch wirkende Zusätze Bedeutung erlangt. Typische Aniontenside dieser Gruppe sind Alkalisalze von Alkylphosphaten bzw. Alkylphosphonaten, z.B. Na-Octyl-1 1/2-Phosphat. Daneben sind auch sulfurierte Mineralöle bzw. Fettalkoholsulfate bzw. Alkylpolyethersulfate verwendbar. Auch Alkalisalze von gegebenenfalls ungesättigten Fettsäuren gehören in diese Gruppe. Weitere Vertreter dieser Gruppe sind Alkalisalze von Alkylbenzolsulfonaten. Typische Amphotenside dieser Gruppe sind die tensidischen Betaine. Besondere Bedeutung haben als Schmelzspinnpräparationsanteile die kationischen Tenside erlangt. Typische Vertreter dieser Gruppe sind Alkyltrimethylammoniumsulfate, z.B. Kokostrimethylammoniummethosulfat. Besonders gut geeignet ist

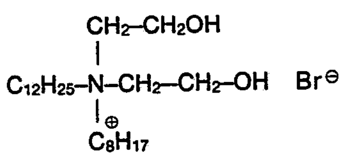

wobei der $C_{12}H_{25}$-Rest sich aus $C_8$-, $C_{10}$-, $C_{12}$-, $C_{14}$-, $C_{16}$- und $C_{18}$-Anteilen als statistisches Mittel ergibt. Dabei können die OH-Gruppen teilweise oder vollständig verestert oder verethert sein. Aufgrund der geringen thermischen Stabilität der stark polaren, ionische Gruppen aufweisenden Komponenten der Gruppe D und ihrer schlechten Verträglichkeit nimmt man von diesen Verbindungen nur die jeweils erforderliche Minimalmenge. Antistatisch wirksame Verbindungen der Gruppen C und D sind zusammenfassend beschrieben von W. Biedermann, Plaste und Kautschuk, 16, 8–15 (1969) sowie von L.R. Kumar in Silk, Rayon Ind., India 12, 315–333 (1969).

Die Erfindung betrifft deshalb Schmelzspinnpräparationen, welche aus

| | |
|---|---|
| 5 bis 100 Gew.-% | der erfindungsgemässen modifizierten Siliconöle der Gruppe A (gemäss Anspruch 1), |
| 0 bis 90 Gew.-% | der unpolaren bzw. schwachpolaren Öle der Gruppe B, |
| 0 bis 30 Gew.-% | der nichtionischen Verbindungen der Gruppe C, |
| 0 bis 15 Gew.-% | der ionogenen Tenside der Gruppe D und gegebenenfalls üblichen Zusätzen, |

wobei die Summe der Bestandteile 100 Gew.-% ergibt,

bestehen.

Je nach Applikationsform können diese Substanzen in dem oben beschriebenen Gemisch unverdünnt oder verdünnt in Form von Lösungen, wobei als Lösungsmittel vorzugsweise Kohlenwasserstoffe geeignet sind, oder in Form von Emulsionen angewendet werden, wobei im Falle der Emulsionen noch geeignete, dem Fachmann geläufige Emulgatoren mitverwendet werden können. Darüber hinaus können diesen Präparationen entsprechend dem Stand der Technik noch übliche andere Zusätze, wie Oxidationsinhibitoren, z.B. Phenole (z.B. Dikresylpropan) oder Natriumhypophosphit, zugesetzt werden.

Die erfindungsgemässen Zubereitungen zeichnen sich gegenüber den Zubereitungen des Standes der Technik mit üblichen Siliconethern durch verringerte Vergelungs- und Vergilbungsanfälligkeit beim langzeitigen Erhitzen auf 200 °C und darüber aus.

Aufgrund der guten Verträglichkeit der erfindungsgemäss verwendbaren Siliconpolyether lassen sich im Rahmen der gezeigten Zusammensetzungen vor allem lösungsmittelfreie Schmelzspinnpräparationen herstellen, welche selbstemulgierend sind und deshalb leicht auswaschbar und gut verträglich. Lösungsmittelfreie, 100%ige Präparationen sind gegenüber Lösungen und Emulsionen wegen der geringeren Umweltbelastung vorzuziehen.

In den folgenden Beispielen wird die Herstellung erfindungsgemässer Verbindungen sowie deren Verwendung bei der Faserbehandlung beschrieben.

Beispiel 1

156,6 g (0,51 Äquivalente) eines Nonylphenylethers der Formel

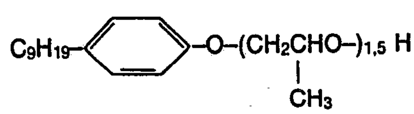

werden mit 1400 ml Toluol versetzt. Danach werden unter Rühren zur azeotropen Trocknung des Nonylphenylethers 300 ml Toluol abdestilliert. Der Kolbeninhalt wird auf 50 °C gebracht und mit 286,3 g (0,50 Äquivalente) eines Chlorsiloxanylsulfates der idealisierten mittleren Durchschnittsformel

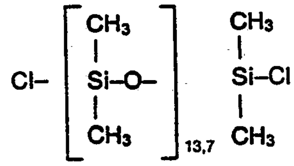

wobei ein Teil des Cl durch $SO_{4/2}$ ersetzt ist, versetzt. Anschliessend wird 30 Minuten bei 50 °C gerührt. Danach wird bei gleicher Temperatur bis zur alkalischen Reaktion Ammoniak eingeleitet. Es wird danach weitere 30 Minuten unter schwacher $NH_3$-Abdeckung gerührt und anschlies-

send auf < 30 °C abgekühlt. Nun erfolgt eine Zwischenfiltration über eine mit einer Filterschicht aus Cellulosefasern belegten Presse. Das blanke Filtrat wird wieder eingesetzt und der Kolben evakuiert. Es wird unter kräftigem Rühren das gesamte, bis zu einer Sumpftemperatur von 100 °C übergehende Destillat abgenommen. Wenn kein Destillat mehr anfällt, wird noch ½ Stunde bei der Sumpftemperatur von 100 °C im Vakuum (20 mm Hg) gerührt. Danach wird der Kolbeninhalt durch Kühlen auf ca. 30 °C gebracht und anschliessend belüftet. Über eine Filterschicht aus Cellulosefasern wird erneut filtriert. Das so hergestellte blanke Produkt hat eine Viskosität (bei 20 °C) von 83 cP.

Beispiel 2

470,6 g (0,63 Äquivalente) eines Nonylphenylpolyethers der Formel

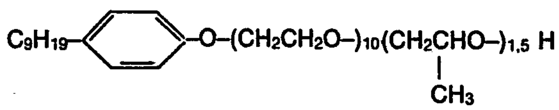

128,9 g (0,42 Äquivalente) eines Nonylphenylethers der Formel

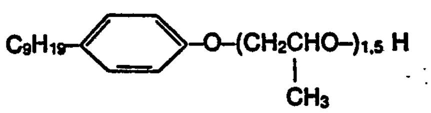

und 3200 ml Toluol werden gemeinsam vorgelegt. Danach werden unter Rühren 650 ml Toluol abdestilliert. Der Kolbeninhalt wird auf 50 °C gebracht und mit 588,5 g (1,0 Äquivalente) eines Siloxans der mittleren Durchschnittsformel

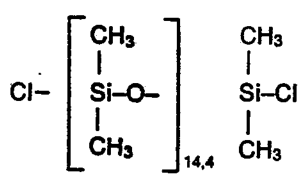

versetzt. Anschliessend wird 30 Minuten bei 50 °C gerührt. Danach wird bei gleicher Temperatur bis zur alkalischen Reaktion Ammoniak eingeleitet. Es wird danach weitere 30 Minuten unter schwacher $NH_3$-Abdeckung gerührt und anschliessend auf < 30 °C abgekühlt. Nun erfolgt eine Zwischenfiltration über eine Filterschicht aus Cellulosefasern. Das blanke Filtrat wird wieder eingesetzt und der Kolben evakuiert. Es wird unter kräftigem Rühren das gesamte, bis zu einer Sumpftemperatur von 100 °C übergehende Destillat abgenommen. Wenn kein Destillat mehr anfällt, wird nach ½ Stunde bei der Sumpftemperatur von 100 °C im Vakuum (20 mm Hg) gerührt. Danach wird der Kolbeninhalt durch Kühlen auf ca. 30 °C gebracht und anschliessend belüftet. Über eine Filterschicht aus Cellulosefasern wird erneut filtriert. Das so hergestellte blanke Produkt hat eine Viskosität (bei 20 °C) von 240 cP.

In den folgenden Tabellen sind unter den Nrn. 1 bis 9 nichterfindungsgemässe Verbindungen und unter den Nrn. 10 bis 18 erfindungsgemässe Verbindungen gegenübergestellt. Die nichterfindungsgemässen Verbindungen unter Nr. 1 und Nr. 2 zeigen herausragende Thermostabilität, in Formulierungen mit oxethylierten Fettaminen, wie z. B. $C_{12}H_{25}N(CH_2CH_2OH)_2$, tritt jedoch nach kurzer Zeit Eintrübung bzw. Phasentrennung ein. Die nichterfindungsgemässen Verbindungen unter Nr. 3 und Nr. 4 zeigen in den entsprechenden Formulierungen mit oxethylierten Fettaminen keine Phasentrennungen bzw. Eintrübung; die thermische Stabilität ist jedoch gegenüber den Verbindungen der Nrn. 1 und 2 erheblich verringert. Die entsprechenden erfindungsgemässen Verbindungen unter den Nrn. 10 bis 14 weisen demgegenüber beide Vorteile zugleich auf: sie sind thermisch ausserordentlich stabil und zeigen in Formulierungen mit oxethylierten Fettaminen, wie z. B. $C_{12}H_{25}N(CH_2CH_2OH_2)$, keine Phasentrennungen oder Eintrübungen. Auch die Verträglichkeit dieser Verbindungen mit Weissöl oder Esterölen wird nicht beeinträchtigt.

Die nichterfindungsgemässe Verbindung nach Nr. 5 ist thermisch wenig stabil. In Formulierungen mit oxethylierten Fettaminen tritt Phasentrennung ein. Die nichterfindungsgemässe Verbindung nach DE-B-26 45 890 unter Nr. 6 zeigt demgegenüber eine klar verbesserte thermische Stabilität, jedoch bleibt der Mangel der Phasentrennung in Formulierungen mit oxethylierten Fettaminen. Gleiches gilt für die nichterfindungsgemässe Verbindung unter Nr. 7. Die nichterfindungsgemässen Verbindungen unter den Nrn. 8 und 9 zeigen den Mangel der Phasentrennung oder Eintrübung nicht; sie weisen jedoch im Vergleich zur Verbindung unter Nr. 6 bzw. Nr. 7 eine deutlich verminderte thermische Stabilität auf. Die entsprechenden erfindungsgemässen Verbindungen unter den Nrn. 15 bis 18 weisen wiederum beide Vorteile auf: sie sind thermisch ebenso stabil wie die Verbindungen entsprechend DE-B-26 45 890 und zeigen in Formulierungen mit oxethylierten Fettaminen, wie z. B. $C_{12}H_{25}N(CH_2CH_2OH)_2$, keine Phasentrennungen oder Eintrübungen. Auch die Verträglichkeit dieser Verbindungen mit Weissöl oder Esterölen wird nicht beeinträchtigt.

Tabelle 1

nicht erfindungsgemäss

| Nr. | Produkt | $R^1$ | $R^2$ | $R^3$ | n | a | b | c |
|---|---|---|---|---|---|---|---|---|
| 1 | entsprechend DE-PS 26 45 459 | 100% $R^2O(CH_2CH(CH_3)O-)_a$ | Nonylphenyl- | – | 13,7 | 0 | – | – |
| 2 | nach Formel I | 100% $R^2O(CH_2CH(CH_3)O-_a$ | Nonylphenyl- | – | 11,4 | 0,5 | – | – |
| 3 | nach Formel I | 100% $R^2O(CH_2CH(CH_3)O-)_a$ | Nonylphenyl | – | 11,4 | 2,5 | – | – |
| 4 | nach Formel I | 100% $R^2O(CH_2CH(CH_3)O-)_a$ | Nonylphenyl | – | 11,4 | 3,0 | – | – |
| 5 | nach Formel I | 100% $R^3(OCH_2CH_2-)_c(OCH_2CH(CH_3)O-)_b$ | – | Nonylphenyl- | 11,0 | – | 0 | 10 |
| 6 | entsprechend DE-PS 26 45 890 | 40% $R^2O(CH_2CH(CH_3)O-)_a$<br>60% $R^3(OCH_2CH_2-)_c(OCH_2CH(CH_3)O-)_b$ | Nonylphenyl- | Nonylphenyl- | 14,4 | 0 | 0 | 10 |
| 7 | nach Formel I | 40% $R^2O(CH_2CH(CH_3)O-)a$<br>60% $R^3(OCH_2CH_2-)_c(OCH_2CH(CH_3)O-)_b$ | Nonylphenyl- | Nonylphenyl- | 14,4 | 0,5 | 0,5 | 10 |
| 8 | nach Formel I | 40% $R^2O(CH_2CH(CH_3)O-)a$<br>60% $R^3(OCH_2CH_2-)_c(OCH_2CH(CH_3)O-)_b$ | Nonylphenyl- | Nonylphenyl- | 14,4 | 2,5 | 2,5 | 10 |
| 9 | nach Formel I | 40% $R^2O(CH_2CH(CH_3)O-)_a$<br>60% $R^3(OCH_2CH_2-)_c(OCH_2CH(CH_3)O-)_b$ | Nonylphenyl- | Nonylphenyl- | 14,4 | 3,0 | 3,0 | 10 |
| 10 | nach Formel I | 100% $R^2O(CH_2CH(CH_3)O-)_a$ | Nonylphenyl- | – | 4 | 1,5 | – | – |
| 11 | nach Formel I | 100% $R^2O(CH_2CH(CH_3)O-)_a$ | Nonylphenyl- | – | 11,5 | 1,0 | – | – |
| 12 | nach Formel I | 100% $R^2O(CH_2CH(CH_3)O-)_a$ | Nonylphenyl- | – | 11,5 | 1,5 | – | – |
| 13 | nach Formel I | 100% $R^2O(CH_2CH(CH_3)O-)_a$ | Nonylphenyl- | – | 11,5 | 2,0 | – | – |
| 14 | nach Formel I | 100% $R^2O(CH_2CH(CH_3)O-)_a$ | 2.6-Di-sec.-butylphenyl- | – | 14,5 | 1,5 | – | – |
| 15 | nach Formel I | 40% $R^2O(CH_2CH(CH_3)O-)a$<br>60% $R^3(OCH_2CH_2-)_c(OCH_2CH(CH_3)O-)_b$ | Nonylphenyl- | Nonylphenyl- | 13,5 | 1,0 | 1,0 | 10 |
| 16 | nach Formel I | 20% $R^2O(CH_2CH(CH_3)O-)_a$<br>80% $R^3(OCH_2CH_2-)_c(OCH_2CH(CH_3)O-)_b$ | Nonylphenyl- | $CH_3(CH_2)_{11}$- | 24 | 1,5 | 1,5 | 22 |
| 17 | nach Formel I | 40% $R^2O(CH_2CH(CH_3)O-)_a$<br>60% $R^3(OCH_2CH_2-)_c(OCH_2CH(CH_3)O-)_b$ | Di-isopropylphenyl- | $CH_3(CH_2)_{10}$-CO- | 24 | 1,5 | 1,5 | 9 |
| 18 | nach Formel I | 40% $R^2O(CH_2CH(CH_3)O-)_a$<br>60% $R^3(OCH_2CH_2-)_c(OCH_2CH(CH_3)O-)_b$ | Nonylphenyl- | $CH_3$- | 14 | 1,5 | 1,5 | 10 |

Tabelle 2

| | Nr. | Viskosität 20 °C, cP | Vergelungszeit Std. bei 200 °C | Verträglichkeit (25 Gew.-% Wirkstoff, 75 Gew.-% Weissöl bzw. Esteröl) | | Beständigkeit einer Mischung aus 80 Gew.-% $C_{12}H_{25}N(CH_2CH_2OH)_2$ und 20 Gew.-% Wirkstoff nach Tagen | | | |
|---|---|---|---|---|---|---|---|---|---|
| | | | | Weissöl 5 °E | Pentaerythrit-tetrapelargonat | 0 | 3 | 7 | 28 |
| | 1 | 45 | > 200 | klar | klar | klar | trübe | sep. | sep. |
| | 2 | 78 | > 100 | klar | klar | klar | klar | trübe | sep. |
| | 3 | 85 | 24 | klar | klar | klar | klar | klar | klar |
| | 4 | 90 | 24 | klar | klar | klar | klar | klar | klar |
| | 5 | 286 | 7 | klar | klar | klar | trübe | sep. | sep. |
| nicht erfindungsgemäss | 6 | 176 | 48 | klar | klar | klar | trübe | sep. | sep. |
| | 7 | 183 | 48 | klar | klar | klar | klar | trübe | sep. |
| | 8 | 188 | 7 | klar | klar | klar | klar | klar | klar |
| | 9 | 190 | 6 | klar | klar | klar | klar | klar | klar |
| | 10 | 170 | > 100 | klar | klar | klar | klar | klar | klar |
| | 11 | 93 | > 100 | klar | klar | klar | klar | klar | klar |
| | 12 | 95 | > 100 | klar | klar | klar | klar | klar | klar |
| | 13 | 90 | > 100 | klar | klar | klar | klar | klar | klar |
| | 14 | 88 | > 100 | klar | klar | klar | klar | klar | klar |
| | 15 | 240 | 15 | klar | klar | klar | klar | klar | klar |
| | 16 | 510 | 14 | klar (unter Erwärmen) | klar (unter Erwärmen) | klar | klar | klar | klar |
| | 17 | 150 | 16 | klar | klar | klar | klar | klar | klar |
| | 18 | 140 | 12 | klar | klar | klar | klar | klar | klar |

sep. = die Mischung trennt sich

**Patentansprüche**

1. Verbindungen der Formel

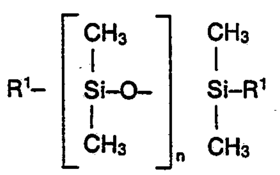

wobei

$R^1$ im durchschnittlichen Molekül verschiedene Bedeutungen haben kann, und zwar 20 bis 100% der Reste $R^1$ den Rest

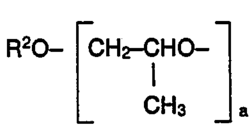

bedeuten, wobei $R^2$ ein Mono-, Di- oder Trialkylphenylrest ist, und die Summe der Alkylkohlenstoffatome je Phenylrest 6 bis 12, und a = 1 oder 2 ist, und

0 bis 80% der Reste $R^1$ den Rest

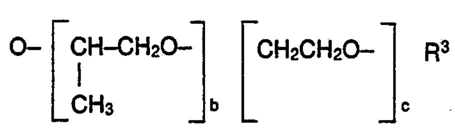

bedeuten, wobei $R^3$ ein Alkylrest mit 1 bis 16 Kohlenstoffatomen, ein Organoacylrest mit 1 bis 12 Kohlenstoffatomen oder ein Arylrest, b = 1 oder 2, und c = 1 bis 30 ist, und n = 3 bis 30 ist.

2. Schmelzspinnpräparation, dadurch gekennzeichnet, dass sie aus

| | |
|---|---|
| 5 bis 100 Gew.-% | der Verbindungen des Anspruchs 1, |
| 0 bis 90 Gew.-% | unpolaren bzw. schwachpolaren Ölen, |
| 0 bis 30 Gew.-% | der nichtionischen Tenside, |
| 0 bis 15 Gew.-% | der ionogenen Tenside und gegebenenfalls üblichen Zusätzen, |

wobei die Summe der Bestandteile 100 Gew.-% ergibt, besteht.

**Claims**

1. Compounds of the formula

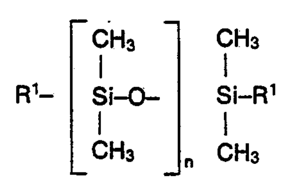

in which $R^1$ in the average molecule can have various meanings, namely

20 to 100% of the radicals $R^1$ denote the radical

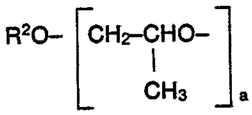

where $R^2$ is a mono-, di- or tri-alkylphenyl radical and the total of the alkyl carbon atoms per phenyl radical is 6 to 12, and a = 1 or 2, and 0 to 80% of the radicals $R^1$ denote the radical

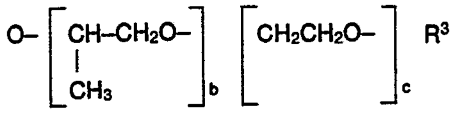

in which $R^3$ is an alkyl radical having 1 to 16 carbon atoms, an organo-acyl radical having 1 to 12 carbon atoms or an aryl radical, b = 1 or 2, and
c = 1 to 30, and
n = 3 to 30.

2. Melt-spinning preparation, characterized in that it consists of

5 to 100% by weight of the compounds of Claim 1,
0 to 90% by weight of non-polar or weakly polar oils,
0 to 30% by weight of nonionic surfactants,
0 to 15% by weight of ionic surfactants and, if appropriate, conventional additives,
the sum of the constituents giving 100% by weight.

**Revendications**

1. Composés de formule

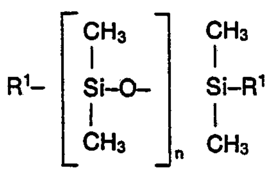

dans laquelle les radicaux $R^1$, dans la molécule moyenne, peuvent avoir différentes significations, savoir:
20 à 100% des radicaux $R^1$ représentent le radical

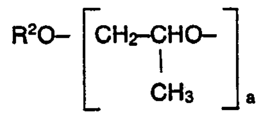

dans lequel $R^2$ est un radical mono-, di- ou trialkylphényle, le nombre total des atomes de carbone sous forme de radicaux alkyle étant de 6 à 12 par radical phényle, et a = 1 ou 2, et
0 à 80% des radicaux $R^1$ représentent le radical

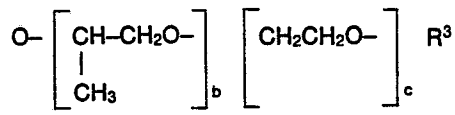

où $R^3$ est un radical alkyle ayant de 1 à 16 atomes de carbone, un radical organoacyle ayant de 1 à 12 atomes de carbone ou un radical aryle, b = 1 ou 2 et c = 1 à 30, et
n = 3 à 30.

2. Préparation pour filage à chaud, caractérisée en ce qu'elle comprend

5 à 100% en poids des composés selon la revendication 1,
0 a 90% d'huiles non-polaires ou faiblement polaires,
0 à 30% en poids de tensioactifs non-ioniques.
0 à 15% en poids de tensioactifs ioniques et éventuellement d'additifs habituels,
le total de constituants faisant 100% en poids.